# FASCICULE DE BREVET EUROPEEN

(11) **EP 1 571 173 B1**
(45) Date de publication et mention de la délivrance du brevet: **11.02.2009**
(21) Numéro de dépôt: 05290448.9
(22) Date de dépôt: 28.02.2005
(51) Int. Cl.: C08G 69/14, C08G 69/16, C08K 3/36, C08K 5/20, C08J 3/14, B29C 67/00

(54) **Procédé de fabrication de poudre de polyamide-12 à point de fusion élevé**
Verfahren zur Herstellung von hochschmelzenden Polyamid-12 Pulvern
Process for producing polyamide-12 powder with high melting point

(30) Priorité: 02.03.2004 FR 0402125
(43) Date de publication de la demande: 07.09.2005
(73) Titulaire: ARKEMA FRANCE, 92700 Colombes (FR)
(72) Inventeur: Loyen, Karine, 27500 Pont-Audemer (FR); Senff, Holger, 27470 Serquigny (FR); Pauly, François-Xavier, 27110 Le Neubourg (FR)
(74) Mandataire: Mouttet, Marie-Paule

(56) Documents cités:
- EP-A- 0 192 515
- EP-A- 0 303 530
- EP-A- 0 911 142

## Description

La présente invention concerne un procédé de préparation de poudre de polyamide 12 à point de fusion élevé. Il s'agit d'une synthèse de type anionique à partir de lauryllactame. Les poudres obtenues ont un diamètre compris entre 15 µm et 100 µm et une température de fusion d'au moins 180°C. Ces poudres de polyamide 12 sont utiles dans de nombreux usages et en particulier dans la technologie d'agglomération de poudres de polyamide par fusion provoquée par un rayonnement tel que par exemple un faisceau laser (laser sintering), un rayonnement infra rouge ou un rayonnement UV (UV curing).

La technologie d'agglomération de poudres de polyamide sous faisceau laser sert à fabriquer des objets en trois dimensions tels que des prototypes et des modèles. On dépose une fine couche de poudre de polyamide sur une plaque horizontale maintenue dans une enceinte chauffée à une température située entre la température de cristallisation Tc et la température de fusion Tf de la poudre de polyamide. Le laser agglomère des particules de poudre en différents points de la couche de poudre selon une géométrie correspondant à l'objet, par exemple à l'aide d'un ordinateur ayant en mémoire la forme de l'objet et restituant cette dernière sous forme de tranches. Ensuite, on abaisse la plaque horizontale d'une valeur correspondant à l'épaisseur d'une couche de poudre (par exemple entre 0,05 et 2mm et généralement de l'ordre de 0,1mm) puis on dépose une nouvelle couche de poudre et le laser agglomère des particules de poudre selon une géométrie correspondant à cette nouvelle tranche de l'objet et ainsi de suite. La procédure est répétée jusqu'à ce que l'on ait fabriqué tout l'objet. On obtient un bloc de poudre contenant à l'intérieur l'objet. Les parties qui n'ont pas été agglomérées sont donc restées à l'état de poudre. Ensuite on refroidit doucement l'ensemble et l'objet se solidifie dès que sa température descend en dessous de la température de cristallisation Tc. Après complet refroidissement, on sépare l'objet de la poudre qui peut être réutilisée pour une autre opération.

Il est recommandé que la poudre ait un écart Tf - Tc le plus grand possible afin d'éviter les phénomènes de déformation (ou "curling") lors de la fabrication. En effet au temps t₀, immédiatement après l'action du faisceau laser, la température de l'échantillon est supérieure à la température de cristallisation (Tc) de la poudre mais l'apport d'une nouvelle couche de poudre plus froide fait chuter rapidement la température de la pièce en dessous de Tc et entraîne des déformations.

Par ailleurs, une enthalpie de fusion (ΔHf) la plus élevée possible est requise afin d'obtenir une bonne définition géométrique des pièces fabriquées. En effet, si cette dernière est trop faible, l'énergie amenée par le laser est suffisante pour fritter par conduction thermique les particules de poudre proches des parois en construction et ainsi la précision géométrique de la pièce n'est plus satisfaisante.

Il est clair que tout ce qui vient d'être expliqué pour l'agglomération de poudres de polyamide sous faisceau laser est valable quelque soit le rayonnement qui provoque la fusion.

Le brevet US 6245281 décrit l'utilisation de poudres de polyamide 12 (PA 12) dans la technologie d'agglomération de poudres sous faisceau laser. Ces poudres sont telles que leur Tf est comprise entre 185 et 189°C, leur Tc est comprise entre 138 et 143°C et leur ΔHf vaut 112±17 J/g. Ces poudres sont fabriquées selon le procédé décrit dans le brevet DE 2906647 (= US 4334056). Dans ce dernier, on fabrique d'abord du PA 12, on le dissout dans l'éthanol entre 130 et 150°C, puis on refroidit doucement en dessous de 125°C sous agitation. Le PA 12 précipite sous forme de poudre.

Le brevet EP 192 515 décrit la polymérisation anionique d'un lactame dans un réacteur agité dans un solvant en présence d'un N,N'- alkylène bis amide et d'une charge organique ou minérale (par exemple la silice en poudre). La proportion de silice est de 1,7 à 17 g pour 1000 g de lauryllactame. La réaction s'effectue entre 100 et 120°C. La poudre de polyamide 12 est recueillie par décantation dans le fond du réacteur. On obtient une poudre de polyamide 12 dont la température de fusion est 177+/- 1°C. Cette température est insuffisante pour l'application dans la fabrication d'objets par les procédés d'agglomération cités plus haut.

On a maintenant découvert qu'en ramenant la proportion de la charge organique ou minérale inférieure ou égale à 1,5g pour 1000 g de lauryllactame, la quantité d'amide de formule R1-NH-CO-R2 dans laquelle R1 peut être remplacé par un radical R3-CO-NH- ou R3-O- et dans laquelle R1, R2 et R3 désignent un radical aryle, alkyle ou cycloalkyle (de préférence, l'amide est le N,N'- alkylène bis amide) étant inférieure à 0,030 mol pour 1000 g de lauryllactame, on obtenait une poudre de polyamide 12 dont la température de fusion est d'au moins 180°C. Avantageusement, la proportion de la charge organique ou minérale est comprise entre 0,05 et 1,5g pour 1000 g de lauryllactame. Préférentiellement, elle est comprise entre 0,2 et 1,5g pour 1000 g de lauryllactame, voire encore plus avantageusement entre 0,35 et 1,3g pour 1000 g de lauryllactame, voire encore plus préférentiellement entre 0,35 et 0,9g pour 1000 g de lauryllactame.

Il est avantageux aussi que la polymérisation soit initiée à une température à laquelle le solvant est en état de sursaturation en lactame.

La présente invention concerne un procédé de préparation de poudre de polyamide 12 par polymérisation anionique de lauryllactame en solution dans un solvant dudit lactame, la poudre de polyamide 12 étant insoluble dans ce solvant, ladite polymérisation se faisant :
- en présence d'un catalyseur et d'un activateur ;
- en présence d'une charge organique ou minérale finement divisée, la proportion de cette charge étant inférieure ou égale à 1,5g pour 1000 g de lauryllactame ; et
- en présence d'un amide de formule R1-NH-CO-R2 dans laquelle R1 peut être remplacé par un radical R3-CO-NH- ou R3-O- et dans laquelle R1, R2 et R3 désignent un radical aryle, alkyle ou cycloalkyle, la proportion de ce composé étant comprise entre 0,001 mol et 0,030 mol pour 1000 g de lauryllactame.

Selon un mode de réalisation, la charge organique ou minérale finement divisée est la silice.

Selon un mode de réalisation, la proportion de la charge organique ou minérale finement divisée est comprise entre 0,05 et 1,5 g pour 1000 g de lauryllactame. Elle peut également être comprise entre 0,2 et 1,5 g pour 1000 g de lauryllactame voire entre 0,35 et 1,3g pour 1000 g de lauryllactame, voire encore entre 0,35 et 0,9 g pour 1000 g de lauryllactame.

Selon un mode de réalisation, l'amide est choisi parmi l'éthylène bis stéaramide (EBS) et l'éthylène bis oléamide (EBO).

Selon un mode de réalisation, la proportion d'amide est comprise entre 0,002 mol et 0,022 mol pour 1000 g de lauryllactame voire entre 0,005 mol et 0,020 mol pour 1000 g de lauryllactame.

Selon un mode de réalisation, la polymérisation est initiée à une température à laquelle le solvant est en état de sursaturation en lactame.

Selon un mode de réalisation, la polymérisation est réalisée en présence de pigments de coloration, de TiO₂, de fibre de verre, de fibre de carbone, de nano-charge, de nano-argile, de nano-tube de carbone, de pigments pour l'absorption infra rouge, de noir de carbone, de charge minérale ou d'additif anti-feu.

L'invention concerne également un procédé de fabrication d'objets en polyamide 12 par agglomération de poudres par fusion provoquée par un rayonnement, les poudres ayant été obtenues selon le procédé décrit précédemment.

Elle est de plus relative à l'utilisation de poudre de PA 12 obtenue par le procédé de préparation décrit plus haut pour fabriquer des objets.

La température de fusion de la poudre de polyamide 12 est d'au moins 180°C, avantageusement de 183 +/-1°C (température de première chauffe mesurée par DSC, abréviation de Differential Scanning Calorimetry, suivant la norme ISO11357 à 20°C/min). L'enthalpie de fusion (1^{ère} chauffe) est de l'ordre de 114 +/-4J/g. La température de cristallisation est de l'ordre de 135 +/-1°C. Les particules de poudre ont une taille moyenne comprise entre 15 et 100µm, avantageusement entre 25 et 60 µm.

Le procédé peut être effectué dans un réacteur agité muni d'un dispositif de chauffage par une double enveloppe ou un serpentin, d'un système de vidange tel qu'une vanne de fond et d'un dispositif d'introduction des réactifs balayé à l'azote sec. On peut opérer en continu ou en discontinu (batch).

Ce procédé présente de nombreux avantages. La poudre est obtenue directement sans étape supplémentaire de retraitement ou de dissolution/précipitation. La taille des particules de poudre est ajustable par les paramètres du procédé et la répartition granulométrique étroite permet l'élimination des phénomènes de poussières lors de la mise en oeuvre de la poudre.
La flexibilité du procédé Orgasol décrit dans le brevet EP192515 est conservée, ce qui est un autre avantage : d'une part la taille moyenne de la poudre peut être ajustée par les paramètres classiques du procédé décrits dans le brevet EP192515 (voir tableau 1) ; d'autre part, les masses moléculaires peuvent être ajustées tout en conservant la répartition granulométrique et le point de fusion élevé pour l'application (voir tableau 2)

Un autre avantage de ce procédé direct est qu'il permet d'introduire dans la masse des additifs qui contribueront à améliorer les propriétés applicatives de la poudre. On peut citer par exemple des pigments pour la coloration, du TiO2, des charges ou des pigments pour l'absorption infra rouge, le noir de carbone, des charges minérales pour diminuer les contraintes internes et des additifs anti-feu. On peut aussi rajouter des additifs permettant d'améliorer les propriétés mécaniques (contrainte à la rupture et allongement à la rupture) des pièces obtenues par fusion. Ces charges sont par exemple des fibres de verre, des fibres de carbone, des nano-charges, des nano-argiles et des nano-tubes de carbone. L'introduction de ces charges au moment de la synthèse permet d'améliorer leur dispersion et leur efficacité. La répartition granulométrique très étroite de ces poudres favorise leur utilisation pour la fabrication de pièces par agglomération sous rayonnement (Infra rouge, UV curing, ...) parce qu'elle conduit à une définition des pièces très fine, et qu'elle diminue les problèmes de formation de poussières lors de la mise en oeuvre de la poudre. De plus, la masse moléculaire du polymère n'augmente pas, pas même après une exposition longue à des températures proches et inférieures à la température de fusion de la poudre (voir tableau 3 ci-dessous). Ceci implique que la poudre peut être recyclée un grand nombre de fois sans modification de son comportement lors de la fabrication de pièces par agglomération sous rayonnement, les propriétés desdites pièces ne variant pas également au cours du process. En outre, ce procédé permet la fabrication d'objet par agglomération de poudre ayant de bonnes propriétés mécaniques (voir tableau 2 ci-dessous).

La présente invention concerne aussi un procédé de fabrication d'objets en polyamide 12 par agglomération de poudre par fusion en utilisant un rayonnement, la poudre de PA12 ayant été obtenue préalablement selon le procédé cité plus haut. A titre d'exemple de rayonnement, on peut citer celui fourni par un faisceau laser (le procédé s'appelle alors "laser sintering"). On peut encore citer le procédé dans lequel un masque est disposé entre la couche de poudre et la source du rayonnement, les particules de poudre protégées du rayonnement par le masque ne s'agglomèrent pas.

S'agissant du solvant, c'est un solvant du lactame par contre la poudre de polyamide est insoluble dans ce solvant. De tels solvants sont cités dans le brevet EP192515. Le solvant est avantageusement une coupe d'hydrocarbures paraffiniques dont la plage d'ébullition se trouve entre 140 et 170°C .

S'agissant du catalyseur, c'est une base suffisamment forte pour créer un lactamate. A titre d'exemple de catalyseur, on peut citer le sodium, le potassium, les hydrures et les hydroxydes de métaux alcalins, les alcoolates de métaux alcalins tels que le méthylate ou l'éthylate de sodium.

S'agissant de l'activateur, on désigne ainsi tout produit capable de provoquer et/ou accélérer la polymérisation. On peut citer à titre d'exemple les lactames-N-carboxyanilides, les isocyanates, les carbodi-imides, les cyanimides, les acyl-lactames, les triazines, les urées, les imides-N-sustituées, les esters. L'activateur peut être formé in situ, par exemple un acyl-lactame est obtenu en ajoutant un isocyanate d'alkyle dans le lactame.

Le rapport du catalyseur sur l'activateur, en moles, peut être compris entre 0,2 et 2 et de préférence entre 0,8 et 1,2. La proportion de catalyseur dans le lactame peut être comprise entre 0,1 et 5 moles, de préférence entre 0,3 et 1,5 pour 100 moles de lactame.

S'agissant de la charge organique ou minérale finement divisée, sa taille peut être comprise entre 0.01 µm et 30µm et de préférence entre 0,01 et 10µm. Cette charge peut être ajoutée dans le réacteur après l'introduction du solvant. Cette charge peut par exemple être de la silice. La proportion de cette charge est avantageusement comprise entre 0,35 et 0,9 g pour 1000 g de lauryllactame. Plus la proportion de la charge organique ou minérale est faible plus la taille de la poudre de polyamide 12 sera élevée.

S'agissant de l'amide, on effectue la copolymérisation en présence, d'une façon générale, d'amides de formule R1-NH-CO-R2 dans laquelle R1 peut être remplacé par un radical R3-CO-NH- ou R3-O- et dans laquelle R1, R2, R3 désignent un radical aryle, alkyle ou cycloalkyle et en particulier d'une N,N'- alkylène bis amide tel que l'éthylène bis stéaramide (EBS) ou l'éthylène bis oléamide (EBO) décrites dans EP 192 515.

S'agissant plus particulièrement des amides de formule R1-NH-CO-R2 et des radicaux R1, R2, R3 des exemples de radicaux aryles peuvent être le phényle, le para-tolyle, l'alpha-naphtyle. Des exemples d' alkyles peuvent être de radicaux méthyle, éthyle, n-propyle, et n-butyle, et un exemple d'un radical cycloalkyle est le cyclohexyle. Les amides préférés sont ceux dans lesquels R1 et R2 identiques ou différents est le phényle ou un alkyle ayant au plus 5 atomes de carbone, R1 pouvant être remplacé par R3-O- et R3 étant un alkyle ayant au plus 5 atomes de carbone. On peut citer par exemple l'acétanilide, le benzanilide, le N-méthyl-acetamide, le N-éthyl-acetamide, le N-méthylformamide et le (4-éthoxy-phényl)acétamide. D'autres amides préférés sont les alkylènes bis amides tels que l'éthylène bis stéaramide (EBS) et l'éthylène bis oléamide (EBO). On ne sortirait pas du cadre de l'invention en effectuant la polymérisation en présence de deux ou plusieurs amides. Plus la proportion d'amide est faible plus la masse molaire de la poudre est élevée. Plus la masse molaire de la poudre est élevée, meilleures sont les propriétés mécaniques des objets fabriqués avec ces poudres et en particulier meilleur est l'allongement à la rupture.

Le procédé décrit plus haut est avantageusement réalisé en discontinu (batch) : on introduit le solvant puis simultanément ou successivement le lactame, l'amide, la charge divisée, le catalyseur et l'activateur. Il est recommandé d'introduire d'abord le solvant et le lactame (ou le lactame en solution dans le solvant) puis d'éliminer toute trace d'eau et quand le milieu est parfaitement sec d'introduire le catalyseur. On peut éliminer les traces d'eau par distillation azéotropique. On ajoute ensuite l'activateur. La charge divisée peut être introduite, par exemple, après l'introduction du lactame. L'amide peut être introduit, par exemple, après l'introduction du lactame. On opère à la pression atmosphérique et à une température comprise entre 20°C et la température d'ébullition du solvant. Il est recommandé que le solvant soit en état de sursaturation de lactame, c'est à dire qu'il est recommandé d'opérer à une température inférieure à la température de cristallisation du lactame dans le solvant. Au-dessus de cette température le lactame est soluble, en dessous il apparaît des germes de lactame : c'est ce qui permet d'augmenter la température de fusion de la poudre de polyamide 12. La détermination de cette température de sursaturation se fait selon les techniques habituelles. La sursaturation du solvant en lactame est aussi décrite dans le brevet EP 303530. La durée de la réaction est fonction de la température et diminue quand la température augmente. Elle est habituellement comprise entre 1h et 12h. La réaction est totale, tout le lactame est consommé. A l'issue de la réaction, on sépare le solvant et la poudre par filtration ou essorage puis la poudre est séchée.

Selon une forme avantageuse de l'invention on introduit d'abord le solvant et le lactame séparément ou simultanément puis après l'élimination de l'eau éventuelle on introduit le catalyseur. Ensuite on introduit l'activateur soit en continu soit par paquets. Bien que des étapes du procédé soient continues on le qualifie de "discontinu" parce qu'il se décompose en cycles commençant avec l'introduction du solvant dans le réacteur et se terminant avec la séparation de la poudre de PA et du solvant.

Dans les **exemples 1, 2, 4 et 5** ci-dessous qui ont pour but d'illustrer l'invention sans toutefois la limiter, les essais ont été réalisés dans un réacteur d'une capacité de 5 litres, muni d'un agitateur à pales, d'une double enveloppe dans laquelle circule de l'huile de chauffage, d'un système de vidange par le fond et d'un sas d'introduction des réactifs balayé à l'azote sec. Un dispositif de distillation azéotropique sous vide permet d'éliminer toute trace d'eau du milieu réactionnel. **L' ex 3 de EP-192515** constitue un comparatif.

### Exemple 1 :

On introduit dans le réacteur maintenu sous azote 2800 ml de solvant, puis successivement 899g de lauryllactame sec, 14,4g d'EBS et 0,72g de silice finement divisée et déshydratée. Après avoir mis en route l'agitation à 300t/min, on chauffe progressivement jusqu'à 110°C, puis on distille sous vide 290ml de solvant afin d'entraîner par azéotropie toute trace d'eau qui pourrait être présente.

Après retour à la pression atmosphérique, on introduit alors rapidement sous azote le catalyseur anionique, 1,44g d'hydrure de sodium à 60% de pureté dans de l'huile, et on augmente l'agitation à 350t/min, sous azote à 110°C pendant 30 minutes.

Ensuite, on ramène la température à 100°C et grâce à une petite pompe doseuse, on réalise une injection continue dans le milieu réactionnel de l'activateur choisi, à savoir l'isocyanate de stéaryle, selon le programme suivant :
- 10,7g d'isocyanate pendant 60 minutes ;
- 17,7g d'isocyanate pendant 132 minutes ;

Parallèlement la température est maintenue à 100°C pendant les 60 premières minutes, puis est montée à 120°C en 30 minutes et maintenue à 120°C pendant encore 2 heures après la fin d'introduction de l'isocyanate.

La polymérisation est alors terminée. Après refroidissement à 80°C, décantation et séchage, la poudre de polyamide 12 obtenue présente les caractéristiques suivantes:
- visco inhérente: 0.99 ;
- granulométrie comprise entre 14 et 40µm avec le diamètre moyen des particules étant 24µm sans agglomérats ;
et le réacteur est presque propre.

### Exemple 2 :

On introduit dans le réacteur maintenu sous azote 2800 ml de solvant, puis successivement 899g de lauryllactame sec, 7,2g d'EBS et 0,36g de silice finement divisée et déshydratée. Après avoir mis en route l'agitation à 300t/min, on chauffe progressivement jusqu'à 110°C, puis on distille sous vide 290ml de solvant afin d'entraîner par azéotropie toute trace d'eau qui pourrait être présente.

Après retour à la pression atmosphérique, on introduit alors rapidement sous azote le catalyseur anionique, 1,44g d'hydrure de sodium à 60% de pureté dans de l'huile, et on augmente l'agitation à 350t/min, sous azote à 110°C pendant 30 minutes.

Ensuite, on ramène la température à 100,2°C et grâce à une petite pompe doseuse, on réalise une injection continue dans le milieu réactionnel de l'activateur choisi, à savoir l'isocyanate de stéaryle, selon le programme suivant :
- 10,7g d'isocyanate pendant 60 minutes ;
- 17,7g d'isocyanate pendant 132 minutes ;

Parallèlement la température est maintenue à 100,2°C pendant les 60 premières minutes, puis est montée à 120°C en 30 minutes et maintenue à 120°C pendant encore 2 heures après la fin d'introduction de l'isocyanate.

La polymérisation est alors terminée. Après refroidissement à 80°C, décantation et séchage, la poudre de polyamide 12 obtenue présente les caractéristiques suivantes:
- visco inhérente: 1,12 ;
- granulométrie comprise entre 3,5 et 170µm avec la diamètre moyen des particules étant 51µm sans agglomérats ;
et le réacteur est presque propre.

### Exemple 4:

On introduit dans le réacteur maintenu sous azote 2800 ml de solvant, puis successivement 899g de lauryllactame sec, 4,95g d'EBS et 0,36g de silice finement divisée et déshydratée. Après avoir mis en route l'agitation à 300t/min, on chauffe progressivement jusqu'à 110°C, puis on distille sous vide , 290ml de solvant afin d'entraîner par azéotropie toute trace d'eau qui pourrait être présente.

Après retour à la pression atmosphérique, on introduit alors rapidement sous azote le catalyseur anionique, 1,79g d'hydrure de sodium à 60% de pureté dans de l'huile, et on augmente l'agitation à 400t/min, sous azote à 110°C pendant 30 minutes. Ensuite, on ramène la température à 100,5°C et grâce à une petite pompe doseuse, on réalise une injection continue dans le milieu réactionnel de l'activateur choisi, à savoir l'isocyanate de stéaryle, selon le programme suivant :
- 3,6g d'isocyanate pendant 60 minutes
- 5,9g d'isocyanate pendant 132 minutes

Parallèlement la température est maintenue à 100,5°C pendant les 60 premières minutes, puis montée à 120°C en 30 minutes et maintenue à 120°C pendant encore 2 heures après la fin d'introduction de l'isocyanate.

La polymérisation est alors terminée. Après refroidissement à 80°C, décantation et séchage, la poudre de polyamide 12 obtenue présente les caractéristiques suivantes:
- visco inhérente: 1,48 ;
- granulométrie comprise entre 15 et 120µm avec la diamètre moyen des particules étant 30µm sans agglomérats ;
et le réacteur est presque propre.

### Exemple 5 :

On introduit dans le réacteur maintenu sous azote 2800 ml de solvant, puis successivement 899g de lauryllactame sec, 9,0g d'EBS et 0,36g de silice finement divisée et déshydratée. Après avoir mis en route l'agitation à 300t/min, on chauffe progressivement jusqu'à 110°C, puis on distille sous vide de 50 mbar, 290ml de solvant afin d'entraîner par azéotropie toute trace d'eau qui pourrait être présente.

Après retour à la pression atmosphérique, on introduit alors rapidement sous azote le catalyseur anionique, 1,44g d'hydrure de sodium à 60% de pureté dans de l'huile, et on augmente l'agitation à 400t/min, sous azote à 110°C pendant 30 minutes. Ensuite, on ramène la température à 100,4°C et grâce à une petite pompe doseuse, on réalise une injection continue dans le milieu réactionnel de l'activateur choisi, à savoir l'isocyanate de stéaryle, selon le programme suivant :
- 10,7g d'isocyanate pendant 60 minutes ;
- 17,7g d'isocyanate pendant 132 minutes ;

Parallèlement la température est maintenue à 100,4°C pendant les 60 premières minutes, puis montée à 120°C en 30 minutes et maintenue à 120°C pendant encore 2 heures après la fin d'introduction de l'isocyanate.

La polymérisation est alors terminée. Après refroidissement à 80°C, décantation et séchage, la poudre de polyamide 12 obtenue présente les caractéristiques suivantes:
- visco inhérente: 1,10 ;
- granulométrie comprise entre 15 et 120µm avec la diamètre moyen des particules étant 40µm sans agglomérats ;
et le réacteur est presque propre.

Les résultats sont rassemblés dans les **Tableaux 1** à **3** suivants.

**Tableau 1**

| Poudres | Température de fusion Tf 1^{ere} chauffe (°C) | Enthalpie de fusion 1^{ere} chauffe (J/g) | Température de cristallisation Tc (°C) | Masse Moléculaire *M̅w̅* (g/mol) | Taille Moyenne des particules de poudre (µm) |
|---|---|---|---|---|---|
| ex 3 de EP 192515 | 177+/-1 | 110 | # | 26000 | 30 |
| Exemple 5 | 184 +/-1 | 117 | 135 +/-1 | 25500 | 40 |
| Exemple 4 | 183 +/-1 | 112 | 135 +/-1 | 47500 | 55 |
| Exemple 1 | 183+/-1 | 109 | 135 +/-1 | 23000 | 24 |
| Exemple 2 | 184 +/-1 | 118 | 135 +/-1 | 30500 | 51 |

**Tableau 2**

| | ex 3 de EP 192515 | poudre Exemple 4 |
|---|---|---|
| Contrainte rupture ou contrainte maxi sur pièce | 43-44 MPa | 40 MPa |
| Allongement rupture | 8% | 30% |

Les propriétés mécaniques ont été mesurées suivant la norme ISO 527-2, à une vitesse de traction de 50 mm/min.

**Tableau 3**

| Poudres | Masse moléculaire *M̅w̅* (g/mol) | Masse moléculaire *M̅w̅* après 8h à 150°C (g/mol) |
|---|---|---|
| Polyamide 12 (obtenu par polycondensation) | 32780 | 45750 |
| ex 3 de EP-192515 | 25150 | 22550 |
| Exemple 1 | 23000 | 21500 |

Les masses moléculaires moyennes Mw ont été mesurées par chromatographie d'exclusion stérique. L'analyse a été effectuée dans l'alcool benzylique à 130°C. Les Masses moléculaires moyennes Mw sont exprimées en équivalent Polyamide 12.

## Revendications

1. Procédé de préparation de poudre de polyamide 12 par polymérisation, ladite polymérisation se faisant par polymérisation anionique de lauryllactame en solution dans un solvant dudit lactame, la poudre de polyamide 12 étant insoluble dans ce solvant :
• en présence d'un catalyseur et d'un activateur ;
• en présence d'une charge organique ou minérale finement divisée, la proportion de cette charge étant inférieure ou égale à 1,5 g pour 1000 g de lauryllactame ; et
• en présence d'un amide de formule R 1 -NH-CO-R2 dans laquelle R1 peut être remplacé par un radical R3-CO-NH- ou R3-O- et dans laquelle R1, R2 et R3 désignent un radical aryle; alkyle ou cycloalkyle, la proportion de ce composé amide étant comprise entre 0,001 mol et 0,030 mol pour 1000 g de lauryllactame.

2. Procédé selon la revendication 1 dans lequel la charge minérale finement divisée est la silice.

3. Procédé selon l'une quelconque des revendications précédentes dans lequel la proportion de la charge organique ou minérale finement divisée est comprise entre 0,05 et 1,5 g pour 1000 g de lauryllactame.

4. Procédé selon l'une des revendications 1 à 3, dans lequel la proportion de la charge organique ou minérale finement divisée est comprise entre 0,2 et 1,5 g pour 1000 g de lauryllactame.

5. Procédé selon l'une quelconque des revendications précédentes dans lequel la proportion de la charge organique ou minérale finement divisée est comprise entre 0,35 et 1,3g pour 1000 g de lauryllactame.

6. Procédé selon l'une quelconque des revendications précédentes dans lequel la proportion de la charge organique ou minérale finement divisée est comprise entre 0,35 et 0,9 g pour 1000 g de laurylfactame.

7. Procédé selon l'une quelconque des revendications précédentes dans lequel l'amide est choisi parmi l'éthylène bis stéaramide (EBS) et l'éthylène bis oléamide (EBO).

8. Procédé selon l'une des revendications 1 à 7 dans lequel la proportion d'amide est comprise entre 0,002 mol et 0,022 mol pour 1000 g de lauryllactame.

9. Procédé selon l'une des revendications 1 à 7 dans lequel la proportion d'amide est comprise entre 0,005 mol et 0,020 mol pour 1000 g de lauryllactame.

10. Procédé selon l'une quelconque des revendications précédentes dans lequel la polymérisation est initiée à une température à laquelle le solvant est en état de sursaturation en lactame.

11. Procédé selon l'une des revendications précédentes, **caractérisé en ce que** ladite polymérisation est réalisée en présence de pigments de coloration, de TiO₂, de fibre de verre, de fibre de carbone, de nano-charge, de nono-argile, de nano-tube de carbone, de pigments pour l'absorption infra rouge, de noir de carbone, de charge minérale ou d'additif anti-feu.

12. Poudre de polyamide 12, susceptible d'être obtenue par le procédé selon l'une quelconque des revendications 1 à 11.

13. Poudre de polyamide 12, **caractérisée en ce que** sa température de fusion est de 181°C à 1841°C.

14. Poudre de PA 12 selon la revendication 13, **caractérisée en ce que** sa température de fusion est 183 +/-1°C.

15. Poudre de PA 12, selon l'une des revendications 13 ou 14, **caractérisée en ce que** les particules de poudre ont une taille moyenne comprise entre 25 et 60 µm.

16. Poudre de polyamide 12 selon l'une des revendications 13 à 15, **caractérisée en ce que** l'enthalpie de fusion (1ère chauffe) est de 114 +/-4J/g.

17. Poudre de polyamide 12 selon l'une des revendications 13 à 16, **caractérisée en ce que** sa température de cristallisation est de 135 +/1°C,

18. Poudre de polyamide 12 selon l'une des revendications 12 à 17 pouvant être recyclée un grand nombre de fois sans modification de son comportement.

19. Procédé d'agglomération de poudre de polyamide 12 selon l'une des revendications 12 à 18 ou d'une composition selon la revendication 19 par fusion provoquée par un rayonnement tel qu'un faisceau laser, un rayonnement infra rouge ou un rayonnement UV.

20. Utilisation de la poudre selon l'une des revendications 12 à 18 ou d'une composition selon la revendication 19 pour fabriquer des objets.

21. Utilisation de la poudre selon l'une des revendications 12 à 18 pour fabriquer des objets par agglomération de ladite poudre par fusion provoquée par un rayonnement tel qu'un faisceau laser, un rayonnement infra rouge ou un rayonnement UV.

## Claims

1. Process for the preparation of polyamide-12 powder by polymerization, the said polymerization being carried out by anionic polymerization of lauryllactam in solution in a solvent of the said lactam, the polyamide-12 powder being insoluble in this solvent:
• in the presence of a catalyst and of an activator;
• in the presence of a finely divided organic or inorganic filler, the proportion of this filler being less than or equal to 1.5 g per 1000 g of lauryllactam; and
• in the presence of an amide of formula R₁-NH-CO-R₂ in which R₁ can be replaced by an R₃-CO-NH- or R₃-O- radical and in which R₁, R₂ and R₃ denote an aryl, alkyl or cycloalkyl radical, the proportion of this amide compound being between 0.001 mol and 0.030 mol per 1000 g of lauryllactam.

2. Process according to Claim 1, in which the finely divided inorganic filler is silica.

3. Process according to either one of the preceding claims, in which the proportion of the finely divided organic or inorganic filler is between 0.05 and 1.5 g per 1000 g of lauryllactam.

4. Process according to either of Claims 1 and 2, in which the proportion of the finely divided organic or inorganic filler is between 0.2 and 1.5 g per 1000 g of lauryllactam.

5. Process according to any one of the preceding claims, in which the proportion of the finely divided organic or inorganic filler is between 0.35 and 1.3 g per 1000 g of lauryllactam.

6. Process according to any one of the preceding claims, in which the proportion of the finely divided organic or inorganic filler is between 0.35 and 0.9 g per 1000 g of lauryllactam.

7. Process according to any one of the preceding claims, in which the amide is chosen from ethylenebisstearamide (EBS) and ethylenebisoleamide (EBO).

8. Process according to one of Claims 1 to 7, in which the proportion of amide is between 0.002 mol and 0.022 mol per 1000 g of lauryllactam.

9. Process according to one of Claims 1 to 7, in which the proportion of amide is between 0.005 mol and 0.020 mol per 1000 g of lauryllactam.

10. Process according to any one of the preceding claims, in which the polymerization is initiated at a temperature at which the solvent is in a state of supersaturation with lactam.

11. Process according to one of the preceding claims, **characterized in that** the said polymerization is carried out in the presence of colouring pigments, of TiO₂, of glass fibre, of carbon fibre, of nanofiller, of nanoclay, of carbon nanotube, of pigments for infrared absorption, of carbon black, of inorganic filler or of flame-retardant additive.

12. Polyamide-12 powder, capable of being obtained by the process according to any one of Claims 1 to 11.

13. Polyamide-12 powder, **characterized in that** its melting point is from 180°C to 184°C.

14. PA-12 powder according to Claim 13, **characterized in that** its melting point is 183 ± 1°C.

15. PA-12 powder according to either of Claims 13 and 14, **characterized in that** the powder particles have a mean size of between 25 and 60 µm.

16. Polyamide-12 powder according to one of Claims 13 to 15, **characterized in that** the enthalpy of fusion (1st warming) is 114 ± 4 J/g.

17. Polyamide-12 powder according to one of Claims 13 to 16, **characterized in that** its crystallization temperature is 135 ± 1°C.

18. Polyamide-12 powder according to one of Claims 12 to 17, which can be recycled a large number of times without modification to its behaviour.

19. Process for sintering polyamide-12 powder according to one of Claims 12 to 18 by melting caused by radiation, such as a laser beam, infrared radiation or UV radiation.

20. Use of the powder according to one of Claims 12 to 18 for manufacturing objects.

21. Use of the powder according to one of Claims 12 to 18 for manufacturing objects by sintering the said powder by melting caused by radiation, such as a laser beam, infrared radiation or UV radiation.

## Patentansprüche

1. Verfahren zur Herstellung eines Polyamid-12-Pulvers durch Polymerisation, wobei die Polymerisation durch anionische Polymerisation von Lauryllactam in Lösung in einem Lösungsmittel für das Lactam, in dem das Polyamid-12-Pulver unlöslich ist,
• in Gegenwart eines Katalysators und eines Aktivators;
• in Gegenwart eines feinteiligen organischen oder anorganischen Füllstoffs, wobei der Anteil dieses Füllstoffs kleiner gleich 1,5 g pro 1000 g Lauryllactam ist; und
• in Gegenwart eines Amids der Formel R1-NH-CO-R2, worin R1 durch einen R3-CO-NH- oder R3-O-Rest ersetzt sein kann und worin R1, R2 und R3 für einen Aryl-, Alkyl- oder Cycloalkylrest stehen, wobei der Anteil dieser Amidverbindung zwischen 0,001 mol und 0,030 mol pro 1000 g Lauryllactam liegt;
erfolgt.

2. Verfahren nach Anspruch 1, bei dem es sich bei dem feinteiligen anorganischen Füllstoff um Siliciumdioxid handelt.

3. Verfahren nach einem der vorhergehenden Ansprüche, bei dem der Anteil des feinteiligen organischen oder anorganischen Füllstoffs zwischen 0,05 und 1,5 g pro 1000 g Lauryllactam liegt.

4. Verfahren nach einem der Ansprüche 1 bis 3, bei dem der Anteil des feinteiligen organischen oder anorganischen Füllstoffs zwischen 0,2 und 1,5 g pro 1000 g Lauryllactam liegt.

5. Verfahren nach einem der vorhergehenden Ansprüche, bei dem der Anteil des feinteiligen organischen oder anorganischen Füllstoffs zwischen 0,35 und 1,3 g pro 1000 g Lauryllactam liegt.

6. Verfahren nach einem der vorhergehenden Ansprüche, bei dem der Anteil des feinteiligen organischen oder anorganischen Füllstoffs zwischen 0,35 und 0,9 g pro 1000 g Lauryllactam liegt.

7. Verfahren nach einem der vorhergehenden Ansprüche, bei dem man das Amid unter Ethylenbisstearamid (EBS) und Ethylenbisoleamid (EBO) auswählt.

8. Verfahren nach einem der Ansprüche 1 bis 7, bei dem der Anteil an Amid zwischen 0,002 mol und 0,022 mol pro 1000 g Lauryllactam liegt.

9. Verfahren nach einem der Ansprüche 1 bis 7, bei dem der Anteil an Amid zwischen 0,005 mol und 0,020 mol pro 1000 g Lauryllactam liegt.

10. Verfahren nach einem der vorhergehenden Ansprüche, bei dem man die Polymerisation bei einer Temperatur, bei der das Lösungsmittel mit Lactam übersättigt ist, initiiert.

11. Verfahren nach einem der vorhergehenden Ansprüche, **dadurch gekennzeichnet, daß** man die Polymerisation in Gegenwart von farbgebenden Pigmenten, TiO₂, Glasfaser, Kohlefaser, Nanofüllstoff, Nanoton, Kohlenstoffnanoröhren, Pigmenten zur Infrarotabsorption, Ruß, anorganischem Füllstoff oder Flammschutzadditiv durchführt.

12. Polyamid-12-Pulver, das nach dem Verfahren nach einem der Ansprüche 1 bis 11 erhältlich ist.

13. Polyamid-12-Pulver, **dadurch gekennzeichnet, daß** seine Schmelztemperatur 180°C bis 184°C beträgt.

14. PA-12-Pulver nach Anspruch 13, **dadurch gekennzeichnet, daß** seine Schmelztemperatur 183 +/- 1°C beträgt.

15. PA-12-Pulver nach Anspruch 13 oder 14, **dadurch gekennzeichnet, daß** die Pulverteilchen eine mittlere Größe zwischen 25 und 60 µm aufweisen.

16. Polyamid-12-Pulver nach einem der Ansprüche 13 bis 15, **dadurch gekennzeichnet, daß** die Schmelzenthalpie (1. Erhitzen) 114 +/- 4 J/g beträgt.

17. Polyamid-12-Pulver nach einem der Ansprüche 13 bis 16, **dadurch gekennzeichnet, daß** seine Kristallisationstemperatur 135 +/- 1°C beträgt.

18. Polyamid-12-Pulver nach einem der Ansprüche 12 bis 17, das ohne Modifizierung seines Verhaltens viele Male rezykliert werden kann.

19. Verfahren zur Agglomeration von Polyamid-12-Pulver nach einem der Ansprüche 12 bis 18 durch Schmelzen, welches durch Strahlung, wie einen Laserstrahl, Infrarotstrahlung oder UV-Strahlung, herbeigeführt wird.

20. Verwendung des Pulvers nach einem der Ansprüche 12 bis 18 oder einer Zusammensetzung nach Anspruch 19 zur Herstellung von Gegenständen.

21. Verwendung des Pulvers nach einem der Ansprüche 12 bis 18 zur Herstellung von Gegenständen durch Agglomeration des Pulvers durch Schmelzen, welches durch Strahlung, wie einen Laserstrahl, Infrarotstrahlung oder UV-Strahlung, herbeigeführt wird.
